# EUROPEAN PATENT SPECIFICATION

(11) **EP 3 464 199 B1**
(45) Date of publication and mention of the grant of the patent: **08.09.2021**
(21) Application number: 17727563.3
(22) Date of filing: 30.05.2017
(51) Int. Cl.: C02F 9/00, C02F 1/20, C02F 1/24, C02F 1/42, C02F 1/44, C02F 1/52, C02F 5/02, C02F 1/28, C02F 3/12, C02F 3/30, C02F 11/12, C02F 1/04, C02F 1/72, E21B 43/34, C02F 1/40, C02F 5/06, C02F 103/36, C02F 103/10, C02F 101/38, C02F 101/32, C02F 101/16

(54) **PROCESS FOR THE TREATMENT OF PRODUCTION WATERS ASSOCIATED WITH CRUDE OIL EXTRACTION**
VERFAHREN ZUR BEHANDLUNG VON PRODUKTIONSGEWÄSSERN IM ZUSAMMENHANG MIT ERDÖLEXTRAKTION
PROCÉDÉ POUR LE TRAITEMENT D'EAUX DE PRODUCTION ASSOCIÉ À L'EXTRACTION DE PÉTROLE BRUT

(30) Priority: 31.05.2016 IT UB20163991
(43) Date of publication of application: 10.04.2019
(73) Proprietor: Eni Rewind S.p.A., 20097 San Donato Milanese (MI) (IT)
(72) Inventor: SAGGESE, Gian Antonio, 20097 San Donato Milanese (MI) (IT); TERRANA, Salvatore, 93100 Caltanissetta (IT); ROSSINI, Manlio, 95037 S.G. La Punta (CT) (IT)
(74) Representative: Cernuzzi, Daniele
(86) International application number: PCT/EP2017/062966
(87) International publication number: WO 2017/207527

(56) References cited:
- CN-A- 105 540 967
- US-A1- 2010 038 310
- US-A1- 2013 313 199
- US-A1- 2016 009 582
- US-B1- 7 520 993

## Description

The present invention relates to an integrated process for the treatment of produced water associated with crude oil extraction for their reuse in the maximization of the environmental sustainability of the operation.

The terms layer water and produced water indicate suspensions and aqueous solutions associated with the extraction of hydrocarbons. Produced water constitute by far the most significant waste stream associated with the oil industry (9,000,000 m³/day in the USA alone).

The composition of produced water is extremely variable and essentially connected with the geology of the reservoir and the extraction technologies. They normally contain both organic and inorganic compounds, some of which are characterized by naturally occurring radioactive materials (NORM), either original i.e., originally present in the subsurface) or anthropogenic (i.e., added by operators to facilitate crude oil extraction operations and/or the subsequent separation operations of the crude oil itself from the water associated with it).

Their management mainly envisages the adoption of extraction technologies that aim to minimize their production, re-injection into the well, discharge and disposal as waste. In light of the volumes at stake, the legislative restrictions imposed on discharge water quality and the constantly increasing focus on saving water resources, the exploitation of production water for civil, agricultural or industrial uses is currently subject to evaluation, particularly by hydrocarbon-producing countries affected by drought.

Naturally, the management of produced water, like any effluent stream deriving from industrial processes, is subject to increasingly strict national and supranational legislation, which envisages concentration limits for every single pollutant.

Recently, due to the exacerbation of the legislation on the disposal of effluent water, and for the purpose of improving public perception of the industrial impact on the environment, treatments of effluent water with "Zero Liquid Discharge" (ZLD) are increasingly common, i.e. that can completely eliminate the disposal of effluent in liquid form. ZLD treatment methods allow the volume of effluent waters requiring further treatment to be reduced to a minimum, on the contrary producing a "clean" water flow, suitable for reuse in other sections of the industrial plant.

Although literature and the bibliography describe various treatment possibilities and multiple individual process sections that could contribute to obtaining particular quality results for the treated waters, up to now no integrated processes are available that are useful for the purification of the production water associated with the extraction of crude oil, at the limits for reuse, characterized by "Zero Liquid Discharge" and by the absence of gaseous emissions.

Due to the complex composition of production waters, processes of the prior art envisage physical, chemical and biological treatments for reaching the limit values defined according to the envisaged use. It is important to note that the latter values are particularly strict in relation to production waters from "on-shore" reservoirs which must be discharged into surface water bodies or exploited.

Critical elements in conventional treatments are mainly connected with the following four factors:

1. The ability to reduce the concentration of dispersed organic compounds, which represents the main specification to be complied with in the case of off-shore produced waters [D. Robinson, Treatment and discharge of produced waters off-shore, Filtr.Sep. March /April (2013) 20- 23].

On this point, it is important to highlight a certain variability between the limit values set by the different environmental protection bodies.

The most representative of these include:
- the *Convention for the Protection of the Marine Environment of the North-East Atlantic* which sets the limit value of dispersed aliphatic hydrocarbons as 30 mg/L;
- the *USA Environment Protection Agency,* whose guidelines are acknowledged by the Federal Regulation (40 CFR Part 435), for which the daily limit value is set at 42 mg/L and the 30-consecutive-day average limit value is set at 29 mg/L (both as fats and oils);
- Italian legislation which sets the limit for total hydrocarbons present in surface water at 5 mg/kg (Tab 3 Appendix 5 Part III of Legislative Decree 152/2006, as amended).

2. The softening of layer waters which consists of reducing the concentration of calcium and magnesium ions in solution. Although they are not toxic ions, the presence of high concentrations of said ions in produced water can cause the precipitation of their insoluble salts, leading to the formation of fouling on the equipments.

The main processes available for softening production waters are:
- ion exchange through ion exchange resins;
- precipitation by adding inorganic bases, e.g. sodium or calcium hydroxides, sodium carbonate (i.e., lime-soda ash treatment, lime softening).
Ion exchange is not recommended however, for salt concentration values over 600 mg/L. In fact, these concentrations, which are frequently reached and exceeded in produced water, lead to the rapid saturation of the ion exchange resins. This increases:
- the quantity of resin to be used;
- the frequency of the regeneration operations with consequent oscillations in the composition of the treated water and an increase in the consumption of chemicals (i.e., inorganic acid and base solutions) and the production of concentrated brines (in turn to be discharged or disposed of as waste).

3. The ability to remove dissolved organic compounds and ammoniacal nitrogen, which can take place through stripping at the same time as removing the dispersed organic compounds, through processes that envisage gas insufflation (e.g., flotation). Alternatively, biological processes can be applied (in the case of biodegradable organic compounds), adsorption on porous means (e.g., activated carbon, pumice) or chemical oxidation (e.g., ozonation).

The specific biological processes for removing ammoniacal nitrogen envisage the use in sequence of a nitrification stage (i.e., oxidation of the ammoniacal nitrogen to nitrite and nitrate ions) and a de-nitrification one (i.e., reduction of the nitrite and nitrate ions to nitrogen). The conditions under which each of these is operated are different (i.e. oxidation is performed in presence of air, reduction in an anoxic environment), hence requiring the use of various distinct reactors. Additionally, the operating conditions (e.g. temperature, pH, availability of carbon sources for bacterial growth) must be carefully defined. In light of this, such processes are considered complex.

Aerobic biological processes available on the market (e.g. active sludge, percolator filters, biofilters, membrane bioreactors) are able to reduce the COD (Chemical Oxygen Demand) and BOD (Biological Oxygen Demand), respectively, of chemical and biological oxygen by up to 95% with respect to the values at the inlet: with the process according to the present invention, it is possible to reach up to 99%.

4. The ability to remove the salts contained in the produced waters

The main processes available for desalinating production waters are:
- ion exchange through ion exchange resins;
- nano-filtration or reverse osmosis through semi-permeable membranes;
- evaporation of the water through thermal processes.

Examples of known methods for waste water treatment are disclosed by US2010038310A1, CN105540967A, US2013313199A1, US7520993B1, US2016009582A1.

The process according to the present invention represents, in light of the state of the art and the technological solutions typically adopted, an innovative solution that uses the most cutting edge technologies available and complies with the guidelines for the choice of the best technologies for this sector.

The process envisages a treatment scheme for produced water associated with crude oil extraction as defined by claim 1.

The structure of the process, i.e. the optimal combination and sequence of the most advanced technologies of which it is composed, constitutes the most original element of the present invention.

An advantage of the present invention is represented by the fact that it allows the treatment of the waters associated with the production of crude oil by removing the main pollutants and achieving the aim of Zero Liquid Discharge.

Another advantage is represented by the fact that the process in accordance with the invention may be widely applied in the oil industry, since production water is by far the most significant effluent stream associated with hydrocarbon extraction processes.

For the purposes of the present description and following claims, the definitions of the numeric ranges always include the extremes unless specified otherwise.

For the purposes of the present description and the following claims, unless specified otherwise, the percentages are by weight.

In the description of the embodiments of the present invention, the use of the terms "comprising" and "containing" indicates that the options described, for example regarding the steps of a method or of a process or the components of a product or of a device, are not necessarily all-inclusive. It is however important to note that the present application also relates to the embodiments in which the term "comprising" in relation to the options described, e.g. regarding the steps of a method or of a process or the components of a product or of a device, must be interpreted as "which essentially consists of" or "which consists of", even if this is not explicitly stated.

Further characteristics and advantages of the present invention shall become clear from the following detailed description and with reference to the appended figures, which intend to illustrate the general characteristics of the method, the structure and/or the materials used in embodiments of the invention and to complete the written description below.

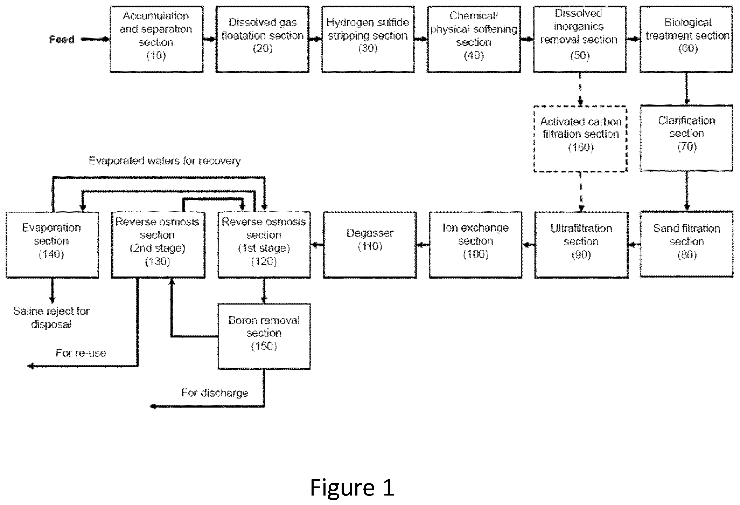

In particular, Figure 1 is a complete block diagram showing an embodiment of the process according to the present invention adapted to treating waters with high levels (>1000 ppm) of COD and of nitrites and nitrates when not comprising the section (150), while adapted to treating waters with lower levels of nitrites and nitrates and COD (<1000 ppm) when it comprises the section 160 and therefore excludes the biological treatment (60).

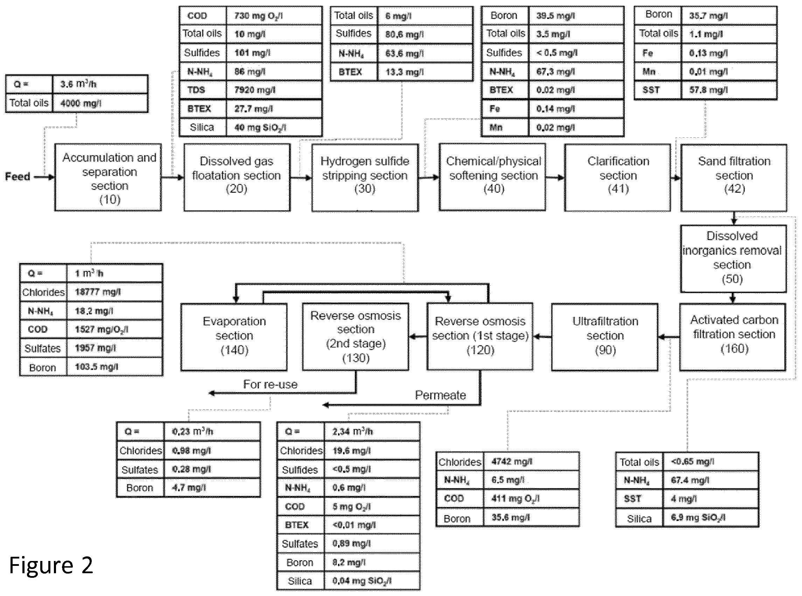

Figure 2 is a block diagram showing the treatment scheme performed in the pilot plant described in the Experimental Section.

The exploitation of the produced waters requires the integration of various stages, each of which comprises one or more processes aimed to the removal of a specific category of contaminants. Each stage of the present process may produce a stream able to be treated in the subsequent stages. The contaminants capable to produce fouling (e.g., dispersed hydrocarbons, calcium and magnesium salts, silica) are removed prior to the desalination stages through semi-permeable membranes just as, prior to the biological treatment stage, any chemical compounds that are toxic to micro-organisms are removed. The process may in some cases envisage extra corrective operations (e.g., heating, cooling, pH correction, disinfection) although not explicitly described.

The chemical/physical characteristics are often variable, also as a function of the different wells in production, and this makes careful coordination of the inlet and outlet specifications from the individual sections necessary.

In particular, the produced water associated with the extraction of crude oil are characterized:
- by a considerable dispersed hydrocarbon content (about 1000 ppm) and suspended solids (about 500 ppm), which require an oil extraction treatment in one or more stages for reaching the requirements for reuse and discharge. Dispersed hydrocarbons can form fouling and blockages in the equipment of the downstream processes especially during processes performed at high pHs at which their water solubility tends to be reduced.
- by the presence of H₂S (200-300 ppm) and volatile substances, which must already be removed in the early stages of treatment to prevent their toxic effect during subsequent biological treatments. The removal of H₂S is also essential for reaching the characteristics for use as demineralized water and for discharge.
- by high salinity. The method with ion exchange resins is not suitable as it is penalized when the salinity is higher than 600 mg/l. In general, in the waters subject to treatment, calcium alone is comprised between 600-900 ppm and total salinity is equal to about 4000 ppm. It is therefore appropriate to use, for example, the classic process with lime-soda ash. The presence of CO₂ at saturation and other substances makes the optimization of the addition of the reagents more difficult. Further points of attention are represented by sludge to be disposed of and basic effluent (to be acidified prior to subsequent treatments, for example to prevent scaling on the reverse osmosis membranes; the latter is essential for reducing the saline content).
- by the presence of ammoniacal, nitrous and nitric nitrogen and soluble organic compounds based on carbon, which can make biological treatment necessary. The presence of nitrogen is generally quite variable, an index of a certain variability in the composition of the waters to be treated. The organic load or COD (about 1000 ppm) based on the type of organic substances contained and the associated forms of nitrogen is such as to require an oxidative biological degradation process through a process comprising nitrification, de-nitrification and aerobic fermentation sections.
- by the presence of boron: compliance with legislation on discharge and quality requirements makes it necessary to provide a boron removal section even if it is contained in low concentrations. The removal of boron as boric acid and salts thereof from production waters represents a critical element. Reverse osmosis is the chosen technology for the massive removal of boron, while ion exchange is the most suitable for finishing operations. The rejection of boron is promoted at pH > 9 (higher presence of borate anions) but where the deposition of encrustations or scaling are also promoted. Hence the need to integrate with softening processes such as ultrafiltration and ion exchange.

The integrated process according to the present invention overcomes all the problems highlighted above and is able to obtain different types of water at the outlet of the treatment:
- water characterized by very low conductivity values and preferably below 0.5 µS/cm with specific refinements downstream of the osmosis sections, reusable for heating boilers;
- waters that can be reused for industrial uses, for example pro-demi industrial water with conductivity <30 µS/cm (based on standard EN 12952-12: 2003 for typical water values supplied to the sections for the preparation of demineralized water for boilers);
- waters to be used for agricultural purposes;
- water that can be discharged into surface water bodies since it falls within the discharge limits envisaged by Italian Legislative Decree 152/2006 (Table 3, column A, Appendix 5, part III).

Based on the required degree of recovery and by combining the treatment sections with evaporation and concentration systems for the saline rejects, it is possible to achieve the zero liquid discharge (ZLD) objective.

The treatment plan does not include system sections that generate emissions since the gaseous stripping streams are handled through closed circuit recycling.

Some of the fractions at the outlet from the treatment process are technically reusable (separated oils, concentrated solutions rich in ammonium sulfate, concentrated saline rejects); the effective possibility for reuse is a function of the legislative specifications applicable and the co-presence of other contaminants.

### AVERAGE CHARACTERISTICS OF THE PRODUCTION WATERS FOR WHICH THE INVENTION IS PROPOSED

| **PARAMETER** | **M.U.** - | **DESIGN RANGE** | **DISCHARGE LIMITS TAB 3. Appendix 5, Part III, Legislative Decree 152/06** |
|---|---|---|---|
| pH | | 6 - 8 | 5.5-9.5 |
| Temperature | °C | Amb. - 45 | |
| Conductivity | µS/cm | 11000 - 20000 | |
| Salinity | g/l | 4 - 20 | |
| Hardness | mg/l CaCO₃ | 1500 - 3000 | |
| TSS | mg/l | 30 - 500 | |
| BOD₅ | mg/l | 5 - 1000 | ≤40 |
| COD | mg/l | 100 - 4000 | ≤160 |
| Total Dissolved Solids | mg/l | 7000 - 14000 | |
| Boron | mg/l | 0 - 80 | ≤2 |
| Calcium | mg/l | 400 - 900 | |
| Iron | mg/l | 0.1 - 4 | ≤2 |
| Lithium | mg/l | 4 - 5 | |
| Magnesium | mg/l | 40 - 400 | |
| Manganese | mg/l | 0 - 0.03 | ≤2 |
| Silica | mg/l | 0 - 100 | |
| Strontium | mg/l | 30 - 60 | |
| Zinc | mg/l | 0 - 1 | ≤0.5 |
| Hydrogen sulfide | mg/l | 0 - 200 | |
| Sulfides | mg/l | 50 - 300 | ≤1 |
| Sulfites | mg/l | 0 - 350 | ≤1 |
| Sulfates | mg/l | 300 - 700 | ≤1000 |
| Chlorides | mg/l | 2000 - 8000 | ≤1200 |
| Bromides | mg/l | 50 - 150 | |
| Total phosphorus | mg/l | 0 - 2 | ≤10 |
| Ammoniacal nitrogen | mg/l | 0 - 100 | ≤15 |
| Nitrous nitrogen | mg/l | 0 - 0.01 | ≤0.6 |
| Nitric nitrogen | mg/l | 0 - 0.5 | ≤20 |
| Total hydrocarbons | mg/l | 0 - 1000 | ≤5 |
| Aromatic compounds | mg/l | 40 - 70 | ≤0.2 |
| of which BTEX | mg/l | 20 - 50 | |
| Organic compounds | mg/l | 0 - 250 | |
| Polyaromatic compounds | mg/l | 0 - 0.1 | |
| Organic nitrogen | mg/l | 0 - 1 | ≤0.1 |

The process according to the present invention comprises the following stages:

### a) Removal of dispersed organic compounds.

The removal of the dispersed organic compounds (therefore insoluble or not very water soluble) generally requires the use of different technologies used in series, as a function of the overall content of the compounds to be removed and the size of the dispersed particles (dispersions or emulsions).

In particular the high hydrocarbon content (about 1000 ppm) in the water to be treated makes an at least two-stage treatment essential, in which the first removes most of the organic compound content in dispersion and the subsequent one allows the concentration limits of said contaminants necessary for the downstream sections to be reached. Such two-stage treatment is thus part of the now claimed invention.

Still due to the high concentrations at the inlet, preferably in the two-stage process according to the
present invention, one or more oil-water separators are conveniently used, preferably API separators.

To guarantee the efficiency and reliability of the separation operations required, the separation of the oils is performed in two steps: the first comprises one or more API separators, applying a suitable residence time as a function of the separability characteristics and the effective oil content and flow rates at stake. Preferably, said residence time is comprised between 10 and 30 hours.

Optionally, this stage may envisage the addition of at least one coagulant in a static mixer, and/or at least one flocculant in a tank equipped with mechanical agitation.

The second separation step is performed in at least a dissolved gas flotation system which uses an inert gas, preferably nitrogen, and a pressure differential (PD) comprised between 3 and 6 barg in the saturator, with partial recirculation of the stream (recirculation comprised between 20 and 50%) and residence time in the flotation system comprised between 30 and 60 minutes. Also in this case, the formation of bubbles promotes the degassing of the H₂S and any lighter gases and therefore the whole system is still maintained in an inert atmosphere, preferably with nitrogen. The section therefore also allows substantial removal of volatile organic substances.

### b) H₂S removal

The H₂S removal section (about 200 - 300 ppm) may be conveniently performed either through stripping (open cycle with steam or closed cycle with inert gas, preferably nitrogen, at acidic pH) or through chemical oxidation, for example with pure oxygen, for complete conversion to sulfates (SO₄²⁻).

The stripping can, for example, take place through at least one H₂S stripping unit, each of these comprising a heat exchanger, for the purpose of preheating the charge, and a subsequent stripping column with 20 plates, provided with a reboiler and condenser. An appropriate acid is also added to the flow at the inlet to the column, for example sulfuric acid, for the purpose of lowering the pH to a value comprised between 5 and 6, which contributes to reaching the desired H₂S removal rate.

In a preferred embodiment of the present invention the acidic water treatment (containing up to 900 ppm of H₂S) is performed in single-stage sour water strippers (SWS) with a single stripping column. After an oil extraction step, the water is heated in a heat exchanger and then sent to the column where it is subjected to stripping with water in countercurrent. The temperature at the inlet to the column is comprised between 90°C and 100°C. The operating pressures in the column range from 0.5 to 1.2 bar and the pH is maintained at values between 5 and 6 to maximize the removal of the H₂S.

In a preferred embodiment of the present invention, the stripping is performed in a closed circuit with nitrogen at acidic pH. In this way the removal of H₂S is obtained at temperatures <45°C with equipment having not excessively heavy metallurgy and with competitive management costs.

The removal of the H₂S in the early stages of the treatment is necessary for:
i) preventing the toxic effect on subsequent biological treatments;
ii) preventing the formation of smelly vapors;
iii) preventing the corrosive effects on the systems of the sections downstream connected with the presence of H₂S.

### c) Softening (chemical-physical)

The purpose of the softening section is the reduction of the concentration of calcium and magnesium ions in solution to prevent the precipitation of their insoluble salts in the subsequent sections and therefore the formation of encrustations on the equipment. As already pointed out, since the concentration of calcium and magnesium salts in the produced water is typically over 600 mg/L, softening according to the claimed process is performed through a lime-soda ash process, which uses calcium hydroxide and sodium carbonate.

The addition of lime (Ca(OH)₂) allows the removal of the temporary hardness (bicarbonates) through the precipitation of insoluble CaCO₃ and Mg(OH)₂. For removing the permanent hardness (sulfates, chlorides and nitrates) soda or sodium carbonate (Na₂CO₃) is used. The excess Ca introduced with the lime therefore precipitates as carbonate. Therefore, the reactions involved are:
✔ Ca(HCO₃)₂ + Ca(OH)₂ → 2CaCO₃ +2H₂O
✔ Mg(HCO₃)₂ + Ca(OH)₂ → MgCO₃ + CaCO₃ +2H₂O
✔ MgCO₃ + Ca(OH)₂ → Mg(OH)₂ + CaCO₃
✔ MgSO₄ + Ca(OH)₂ → Mg(OH)₂ +CaSO₄
✔ CaSO₄ + Na₂CO₃ → CaCO₃ + Na₂SO₄
✔ MgCl₂ + Ca(OH)₂ → Mg(OH)₂ +CaCl₂
✔ CaCl₂ + Na₂CO₃ → CaCO₃ + 2NaCl
✔ Ca(OH)₂ + Na₂CO₃ → CaCO₃ + 2NaOH

The presence of sodium hydroxide at the end of the process gives the water a basic pH, a characteristic which, in the event of use in contact with metal piping, protects it. It is good to remember that the lime-soda ash method does not completely remove the hardness of the water but allows it to be reduced to lower values than 5°f (French degrees). Moreover, the process is conveniently performed at a temperature of 60-70 °C so as to facilitate the removal of bicarbonates.

In an aspect of the present invention, at the outlet of the chemical-physical softening section, it may be appropriate to insert a sand filtration section to remove suspended solid residues.

### d) Removal of dissolved inorganic compounds

The treated waters at the outlet from section c) are sent to a stripping unit for ammonia and/or other water soluble gases.

Stripping is the treatment typically used for separating dissolved gases (e.g. ammonia, hydrogen sulfide, volatile hydrocarbons) from water. It may be performed in filling towers (in the case of flexi ring species) or with plates.

The operation may be performed with a pH close to 11, for allowing the desired ammonia removal degree to be reached. The expected concentration of ammonia at the outlet from the stripping column is normally less than 10 ppm.

The stripping operation is performed with a closed circuit air flow; the gaseous stream rich in ammonia at the outlet from the head of the stripping column can be sent to an acid absorber (e.g. scrubber with sulfuric acid solution at pH 3).

The gaseous stream, thus purified, can be introduced into circulation at the bottom of the stripping column. The acidic solution recycled by the scrubber is periodically reintroduced and the excess solution enriched in ammonium sulfate disposed of. Such current, according to the degree of purity achieved, may be reused, subject to neutralization, as nitrogen fertilizer.

The pH of the treated water at the outlet from the stripping section is controlled with the addition of hydrochloric acid for obtaining a pH comprised between 8.5 and 9.

The stripping, performed between 20 and 35°C, is carried out with a ratio of liquid for stripping/stripping gas that ranges from 1/5000 to 1/10000.

In an aspect of the present invention, when the concentration of ammonia measured in the water for treatment at the inlet to the column is between 50 and 100 mg/l, the treated water at the outlet from the column may have ammonia concentrations equal to 5 mg/l. The yield of the section is therefore greater than 90 %.

In an aspect of the invention, relative to the treatment of the gaseous stream, envisaged for total recycling without any emissions into the atmosphere, the flow rate of the acidic solution (pH 3) for recycling in the scrubber is constantly maintained at the value of 2 times the flow rate of water to be treated.

### e) Removal of soluble organic compounds (biological treatment)

For completing the removal of the organic and inorganic compounds dissolved and the ammoniacal nitrogen, an embodiment of the process according to the present invention envisages the use of a biological treatment (in the case of biodegradable organic compounds) performed in a specific tank, especially when the TOC (Total Organic Carbon) and COD values in the waters to be treated are particularly high (COD>1000 mg/L). In particular, when such TOC and COD values are associated with a high nitrite and nitrate content, the biological treatment must further envisage a de-nitrification section.

The removal of the organic substances takes place by means of oxidation determined by the metabolism of aerobic bacteria in suspension (so called "active sludge") therefore the operating conditions are maintained so as to be perfectly compatible with the actual life of the specialist bacterial flora, which can hence live, prosper and degrade. The bacteria are naturally selected by the conditions of the environment where they are found, hence in environments with a high concentration of proteins the species of the *Alcaligenes, Flavobacterium* and *Bacillus* genera predominate, whereas in environments rich in carbohydrates the *Pseudomonas* genera predominate and with low concentrations of O₂ and organic substances the species of the *Nitrosomonas* and *Nitrobacter* genera proliferate. A part of the degradation occurs in the active sludge where there is catalytic degradation performed by esoenzymes on the organic molecules which are thus used by the micro-organisms for energy purposes.

For the purpose of the correct operation of the bacterial charge within the biological tank it is absolutely necessary to add at least one source of phosphorous (such as phosphoric acid) while it may be necessary to add urea, and at least one source of carbon (normally like molasses).

In fact, in the waters to be treated, there is normally no phosphorous; this element can therefore be supplied through dosing phosphoric acid at the rate of 1 L/h of H₃PO₄ 80% solution.

It is important to underline that at least one source of carbon must be readily available and easily assimilable by the bacteria: if the effluent contains recalcitrant carbon-based compounds, particularly when the molecules to be oxidized have a complex structure, it may be necessary to provide at least one more easily bioassimilable source of carbon, for example methanol, or molasses, that has lower manipulation risks. Further sources of carbon that do not present any risks connected with manipulation may be taken into consideration (for example mixtures of glycerol).

In the oxidation zone, a high concentration of dissolved oxygen is maintained through aeration: in this way the bacteria are able to degrade the various organic substances to carbon dioxide and water, while nitrogen, present as an amine group or free ammonia, is oxidized to nitrate.

The distribution of the oxygen takes place through air insufflated by the microbubble aeration system. The system is able to guarantee powerful turbulence so as to guarantee the complete mixing of the contents of the tank and an oxygen concentration above 4 ppm.

Sedimentation/clarification units are required for the separation of the active sludge. While the active sludge is in part recycled and in part sent to a section comprising an aerobic digester and a thickener, the clarified waters rise and flow out through a weir placed on the outer perimeter of the tank in which the treatment is performed for moving onto the next stage.

The sludge produced and separated in clarifiers is directed into an aerobic digester. The aim of this unit is to stabilize the sludge itself which, in the absence of organic substance as food, degrades itself ("stabilization" step).

The sludge at the outlet of the aerobic digester has a concentration of 2-5%, while at the outlet of the thickener it can even reach contents of 10%.

Various additives are required in the separation of the sludge, typically at least a polyelectrolyte and sometimes also lime.

Alternatively, stage e) can be replaced by the following stage e)':

### e)' Filtration on activated carbon

In a preferred embodiment of the present invention, when there are low nitrite/nitrate contents and an organic carbon content mainly determined by volatile compounds, the entire section of the biological treatment envisaged in the previous point may be replaced by a filtration section with activated carbon as integration to the removal of ammoniacal nitrogen.

With this section it is possible:
- to allow the completion of the removal of aromatic organic solvents (e.g. BTEX, or benzene, toluene, ethylbenzene and xylene);
- to withhold by adsorption the share of COD due to poorly polar dissolved fractions, to protect the membrane sections downstream (ultrafiltration and inverse osmosis).

The analytical assessments of the tests performed on the pilot system, described herein in the following Experimental Section, in the activated carbon section, provide the following useful indications:
a) the dissolved gas floatation (DGF) operation and the H₂S stripping operation remove 52% and 99.8% respectively, of the BTEX at the inlet. Upstream of the activated carbon section there are 0.02 mg/L of BTEX, a value that is already below the limits for discharge into a surface water body (0.2 mg/L): the activated carbon section has no effect on the purification process for removing aromatic organic solvents since they have already been removed by the other sections;
b) the activated carbon section allows over 40% removal of the COD, indicating the presence of a poorly polar dissolved fraction susceptible to sensitive removal with activated carbon filtration.

From the GC-MS screening investigations on representative samples of activated carbon on the water side, it has emerged that the activated carbon withheld substantial quantities of higher glycols (circa 50 mg/kg).

The assessments referred to in point b) provide the necessary support for the alternative configuration to the biological treatment which for reduced contents of TOC, COD, nitrates and nitrites can be substituted with the two stripping operations with air and activated carbon filtration.

As already pointed out, the efficacy and efficiency of the activated carbon section makes the evaluation of treatment plans without the use of a biological reactor plausible.

The absence of the biological reactor implies a sensitive reduction in the costs for the installation and management:
- of oxidation tanks;
- of blower systems and the related treatment of gaseous emissions;
- of biological sludge sedimentation, digestion, thickening and dewatering systems;
- of systems for dosing the biological nutrients and chemicals for the sedimentation and dewatering of biological sludge (as well as the related disposal costs).

In a preferred embodiment of the present invention, the controlled operation of the pilot system has shown that, with incoming COD values up to 700/750 ppm, even without a biological reactor, it is possible to obtain discharge in compliance with the requirements for discharge into surface water bodies.

### f) Desalination (filtration - ultrafiltration - ion exchange - reverse osmosis).

### 1 Filtration.

Ion exchange and reverse osmosis processes are particularly influenced by dirtying effects that cause their loss of efficiency over time. For this reason they require a series of pre-treatments so as to achieve water free from dispersed organic and inorganic compounds, softened and clarified.

The first step of such pretreatment is always filtration which may be performed using different technologies.

Among these, the use of sand filters is very consolidated and allows the automatic regeneration of the filter itself. All these technologies are able to remove fine particles therefore a further ultrafiltration step is necessary.

3 to 5 up-flow filters are provided in parallel, at least two of which are always operating while the others are being washed. The washing is performed with water/air and rinsing with water. The addition of a biocide to the washing water prevents the growth of biomass that could block the filters.

### 2 Ultrafiltration (UF).

Ultrafiltration (UF) membranes act almost exclusively as mechanical filters. They are normally placed as protection upstream of nanofiltration and reverse osmosis systems which are used for actual desalination.

The characteristics of the water supplied to UF are marked by a low suspended solid content (Total Suspended Solids, TSS < 30 mg/L) therefore a pressurized system with a hollow fiber membrane is sufficient. The addition of additives is also often provided (coagulants, flocculants, polyelectrolytes) to destabilize the colloids contained (e.g. silica).

### 3 Reverse osmosis (RO)

Reverse osmosis (RO) is certainly the most economically viable process with respect to other technologies based on distillation, evaporation or electrodialysis. Such treatment may be conveniently repeated for one or more distinct sections.

The high hardness of the layer waters and the strict specifications required for the reverse osmosis systems suggest optionally including a softening section with resins in the treatment scheme downstream of the ultrafiltration section.

In particular the following are envisaged:
- a softening section through cation exchange resin for reducing the mean hardness to values <0.1 ppm;
- a heavy-duty degassing section for reaching CO₂ values <10 ppm;
- an increase in pH at the inlet to reverse osmosis, for achieving operating advantages and reliability over time (reduction of the risk of bacterial proliferations, alkaline hydrolysis of some forms of silica).

However, for pH > 10 some critical points must be considered:
- the upper limit of chemical stability of the membranes is reached;
- the formation of insoluble salts and hydroxides is promoted, as well as the segregation of dispersed hydrocarbons, both causes of encrustations in the equipment.

In a preferred aspect, the scheme envisages downstream of the above pre-treatments, the whole flow rate, for example of 100 m3/h, being subjected to a first reverse osmosis section for obtaining, for example, from 70 to 85 cubic meters of water in compliance with the surface discharge for all the parameters and for salinity, except boron which is removed in a relevant exchange resin section upstream of the discharge into surface waters.

A second osmosis section allows 20 to 40 m3/h of water to be produced starting from the waters compliant for discharge, with conductivity <30 micro Siemens/cm suitable for being reused.

The reject from the osmosis section, with salt concentrations of about 30 g/L, is conveniently supplied to an evaporation section, as described below, for further thermal concentration. In relation to discharge compliance, the high removal yield of the COD is reported, which is equal to 98.8%.

### g) Evaporation and Concentration.

The purpose of this section is the recovery of demineralized water from the saline flow at the outlet from Reverse Osmosis and therefore further reduction of the flow to be sent for discharge (Zero Liquid Discharge - ZLD). The spread of the ZLD philosophy, although partly promoted by the application of the strict legislation on the composition of liquid discharge is, on the other hand, hindered by the high implementation and management costs.

In the process according to the present invention various Zero Liquid Discharge (ZLD) sections of the MVR (Mechanic Vapor Recompression) type are provided.

In particular, one or more single step systems of the evaporator/concentrator type are used, because they are less expensive than triple-effect systems, with mechanical recompression of the vapor produced and forced recirculation of concentrated slurry. The evaporator is equipped with demisters to guarantee the separation of the drawn particles and therefore the reliability of the vapor compressor. Obviously, all the relevant heat recovery devices are provided so as to optimize the energy requirements.

The unit (or unit train) produces demineralized water with low conductivity (condensate) and a saline slurry that is dehydrated on a centrifuge for obtaining a semi-solid "saline sludge" with 600 g/liter of solids, with a residual humidity from 10 to 20% by weight.

It has been demonstrated that the best results from the section can be achieved by reducing the residual calcium and carbon hardness with a pretreatment at pH 11. This part in the industrial system is performed by the softening section provided prior to the reverse osmosis stage.

The above performance levels can be reached with an ebullioscopic delta T of about 9°C, a viscosity of the concentrate of about 1.2 cP and a density of 1200 kg/m3 at the temperature of about 70°C and absolute pressure of 300 mbar. The electrical energy consumption for the system is about 70kWh per metric ton of evaporate.

### h) Boron removal

The permeate coming from the reverse osmosis section may contain boron levels that do not comply with legislative limits. It is therefore necessary to provide a specific section for removing boron through ion exchange resins.

Boron in water is always contained in the form of boric acid, a very weak acid with a low solubility product. At pH less than 7 boric acid is undissociated. Boric acid also behaves like a Lewis acid.

The ion exchange resin is normally activated for the complexation link with the borate in its acid form.

Once the resins have all exchanged their ions with the ionic contaminants contained in the water, they must be regenerated (i.e. the ions must be substituted through a solution with a high content thereof). The regeneration inverts the purification process of the water resource by replacing the contaminants linked to the resins with hydrogen and hydroxyl ions. For this reason, the ion exchange systems must be equipped with a device for automatic regeneration, which must be performed at intervals as a function of the quantity of contaminant to be removed. High removal yields imply frequent regenerations.

Regeneration is obtained through replacing borate with NaOH and recovering the starting conditions with hydrochloric acid or sulfuric acid. Such resin in the regeneration stage determines water waste in the order of 2% of the water produced.

Concentrations at the outlet from 0.10 to 0.30 ppm of boron can be achieved.

### EXPERIMENTAL SECTION

The pilot plant, after assembly and authorization for the campaign by the public administration, was run for about two months and a total of 765 m³ of water associated with the crude oil extraction process was treated, coming from an oil center run by the Applicant.

The operation was performed during the day time, for the development of equipment, treatment sections and analytical methods; and continuously (24h/24h) with a mean flow rate of 3.6 m³/h.

The results of the controlled operation are summarized in a block diagram (Figure 2). The diagram shows the concentrations of the significant analytes for the purpose of the treatment process performed.

During the campaign, the process parameters always remained within the specific values envisaged; no problems connected with safety or the environment arose.

The waters to be treated were discharged into tanks equipped with an oil recovery system, for the purpose of performing the equalization and oil/water primary separation. The oil separated into these tanks was characterized and sent for disposal. The gaseous phase of the tanks was sent to the devoted discharge abatement system unit, comprising equipment filled with absorbent materials (filling beds based on granular metal oxides - Sulfatreat™) and activated carbon.

The partially de-oiled waters were then conveyed from the aforementioned tanks to the dissolved gas floatation (DGF) system for the secondary separation of the residual oils. Nitrogen was used for floatation, dosed at the pressure of 3 bar into floatation unit recycling circuit tank. The gas phase of the DGF unit was sent to the devoted abatement system with Sulfatreat™ absorber and activated carbon. The floating oily fraction was sent for disposal.

The de-oiled water was advanced to the H₂S stripping unit, after the addition of hydrochloric acid for lowering the pH to a value close to 4, which guarantees that the desired H₂S removal level is reached. At the outlet from the stripping column a concentration of H₂S < 1 ppm was reached.

The stripping operation was performed with a closed circuit nitrogen flow; the gaseous current at the outlet from the head of the stripping column was sent to an alkaline absorber (recycling scrubber with soda solution at pH 12) and then to a finishing system with absorption of the residual hydrogen sulfide on Sulfatreat™ filters and adsorption of the volatile organic compounds (VOCs) stripped on activated carbon filters subject to the suitable recovery of the optimal thermohygrometric conditions for the maximum efficiency of the activated carbon (condensation of the vapors at low temperature and post reheating with heat pump coupled system). The gaseous stream, thus purified, was reintroduced at the bottom of the stripping column. The alkaline solution recycled at the scrubber was periodically reintegrated and the excess solution enriched with sulfides was disposed of in external authorized plants subject to characterization.

The flow of treated water, at the outlet from the bottom of the stripping column had caustic soda added to it until a pH of 8.5-9 was reached, and was then sent to the chemical/physical section for insolubilizing and separating the metals contained therein from the aqueous solution through coagulation/flocculation/clarification obtained by activating caustic soda until a pH of 11-11.5, ferrous sulfate, a polyelectrolyte and sedimenting with the aid of a compact clarifier with lamella plates.

The sludges extracted from the clarifier, after thickening on the thickener, were dehydrated with a filter press unit and then sent for disposal subject to characterization.

The treated water at the outlet from the chemical/physical section was then sent to a sand filter system for the separation of any residual suspended solids and traces of oil. The sand filters were periodically washed in countercurrent.

The treated waters at the outlet from the sand filters were sent to an ammonia stripping unit. The operation was performed with a pH close to 11, for allowing the desired ammonia removal degree to be reached. The expected concentration of ammonia at the outlet from the stripping column is < 10 ppm.

The stripping operation was performed with a closed circuit air flow; the gaseous stream rich in ammonia at the outlet from the head of the stripping column was sent to an acid absorber (scrubber with sulfuric acid solution at pH 3). The gaseous stream, thus purified, was reintroduced into circulation at the bottom of the stripping column. The acidic solution recycled by the scrubber was periodically reintroduced and the excess solution enriched in ammonium sulfate disposed of in external authorized plants.

The treated waters at the outlet from the bottom of the ammonia stripping column were acidified to pH 8.5-9 and sent to a set of guard filters with activated carbon for the adsorption of any organic compounds.

The waters at the outlet from the activated carbon filters were fed to the ultrafiltration (UF) section for the removal of suspended and colloidal solids. The waters thus treated were conveyed to the reverse osmosis section equipped with first and second step for the purpose of producing:
- at the outlet from the first step, waters compliant for discharge into surface water bodies (Tab. 3, column A, Appendix 5, Title III, of Italian Legislative Decree 152/2006);
- at the outlet from the second step, waters compliant for "pro-demi" industrial uses.

The reject from the osmosis section, with salt concentrations of about 30 g/L, was fed to the thermocompression section, for the reduction in volume of the saline reject to be disposed of and the increase in content of recoverable waters.

The following tables show the values for the main parameters measured at the outlet from the sections comprising the pilot system.

**Table 1 - Feed Characteristics**

| | |
|---|---|
| Q = | 3.6 m³/h |
| Total oils | 4000 mg/l |

**Table 2 - Characteristics of the water at the outlet of the accumulation and separation section**

| | |
|---|---|
| COD | 730 mg O₂/l |
| Total oils | 10 mg/l |
| Sulfides | 101 mg/l |
| N-NH₄ | 86 mg/l |
| TDS | 7920 mg/l |
| BTEX | 27.7 mg/l |
| Silica | 40 mg SiO₂/l |

**Table 3 - Characteristics of the water at the outlet of the dissolved gas floatation section**

| | |
|---|---|
| Total oils | 6 mg/l |
| Sulfides | 80.6 mg/l |
| N-NH₄ | 63.6 mg/l |
| BTEX | 13.3 mg/l |

**Table 4 - Characteristics of the water at the outlet of the hydrogen sulfide stripping section**

| | |
|---|---|
| Boron | 39.5 mg/l |
| Total oils | 3.5 mg/l |
| Sulfides | < 0.5 mg/l |
| N-NH₄ | 67.3 mg/l |
| BTEX | 0.02 mg/l |
| Fe | 0.14 mg/l |
| Mn | 0.02 mg/l |

**Table 5 - Characteristics of the water at the outlet of the chemical/physical softening section**

| | |
|---|---|
| Boron | 35.7 mg/l |
| Total oils | 1.1 mg/l |
| Fe | 0.13 mg/l |
| Mn | 0.01 mg/l |
| SST | 57.8 mg/l |

**Table 6 - Characteristics of the water at the outlet of the sand filtration section**

| | |
|---|---|
| Total oils | < 0.65 mg/l |
| N-NH₄ | 67.4 mg/l |
| SST | 4 mg/l |
| Silica | 6.9 mg SiO₂/l |

**Table 7 - Characteristics of the water at the outlet of the activated carbon filtration section**

| | |
|---|---|
| Chloride s | 4742 mg/l |
| N-NH₄ | 6.5 mg/l |
| COD | 411 mgO₂/l |
| Boron | 35.6 mg/l |

**Table 8 - Characteristics of the water at the outlet of the reverse osmosis section (1st stage)**

| | |
|---|---|
| Q = | 2.34 m³/h |
| Chloride s | 19.6 mg/l |
| Sulfides | < 0.5 mg/l |
| N-NH₄ | 0.6 mg/l |
| COD | 5 mg O₂/l |
| BTEX | < 0.01 mg/l |
| Sulfates | 0.89 mg/l |
| Boron | 8.2 mg/l |
| Silica | 0,04 mg SiO₂/l |

**Table 9 - Characteristics of the water at the outlet of the reverse osmosis section (2nd stage)**

| | |
|---|---|
| Q = | 0.23 m³/h |
| Chloride s | 0.98 mg/l |
| Sulfates | 0.28 mg/l |
| Boron | 4.7 mg/l |

**Table 10 - Characteristics of the saline reject from the reverse osmosis section (1st stage)**

| | |
|---|---|
| Q = | 1 m³/h |
| Chlorides | 18777 mg/l |
| N-NH₄ | 18.2 mg/l |
| COD | 1527 mg/O₂/l |
| Sulfates | 1957 mg/l |
| Boron | 103.5 mg/l |

## Claims

1. Integrated process for the treatment of production waters associated with crude oil extraction comprising the following stages in the given order:
a) removal of dispersed organic compounds in an at least two-stage treatment, in which a first stage removes most of the organic compound content in dispersion and a subsequent second stage allows the concentration limits of said contaminants necessary for downstream sections to be reached;
b) H₂S removal;
c) chemical/physical softening
through a lime-soda ash process;
d) removal of dissolved gaseous inorganic compounds performed by stripping with air flow in a closed circuit;
either e)
removal of soluble organic compounds by biological treatment by means of
oxidation determined by the metabolism of aerobic bacteria in suspension, i.e.
by means of
active sludge,
or e)' removal of soluble organic compounds by active carbon filtration;
f) desalination comprising a filtration section, an ultrafiltration section and one or more reverse osmosis sections;
g) evaporation and concentration of the saline concentrates from reverse osmosis;
h) boron removal from the permeate of reverse osmosis, in a section for removing boron through ion exchange resins.

2. Process, according to claim 1, wherein stage a) is conducted in the presence of one or more oil-water separators, preferably API separators.

3. Process, according to claim 1 or 2, wherein stage b) is performed through H₂S stripping or by chemical oxidation, preferably in a closed circuit with nitrogen at acidic pH.

4. Process, according to each of claims 1 to 3, wherein stage c) is conducted through a lime-soda ash process with the insertion of a sand filtration section at the outlet.

5. Process, according to each of claims 1 to 4, wherein stage e) is performed by biological treatment based on active sludge, in the presence of a suitable source of carbon, phosphorus and urea and downstream, a clarification section for the separation of activated sludge.

6. Process, according to each of claims 1 to 5, wherein stage f) is performed by means of
a sand filtration section, an ultrafiltration section and one or more reverse osmosis sections.

7. Process, according to claim 6, wherein stage f) is performed by providing a resin-based softening section followed by a degasification section between the ultrafiltration and reverse osmosis sections.

8. Process, according to anyone of claims 1 to 7, wherein stage g) is performed by one or
more single-stage evaporator/concentrator type systems.

## Patentansprüche

1. Integriertes Verfahren zur Behandlung von Produktionsgewässern im Zusammenhang mit Erdölextraktion, umfassend die folgenden Stufen in der angegebenen Reihenfolge:
a) das Entfernen von dispergierten organischen Verbindungen in einer mindestens zweistufigen Behandlung, in welcher eine erste Stufe den größten Anteil der organischen Verbindung in Dispersion entfernt und eine anschlie-ßende zweite Stufe das Erreichen der für die nachgeschalteten Abschnitte erforderlichen Konzentrationsgrenzen der Verunreinigungen ermöglicht;
b) das Entfernen von H₂S;
c) das chemisch/physikalische Enthärten durch ein Kalk-Natriumcarbonat-Verfahren;
d) das Entfernen von gelösten gasförmigen, anorganischen Verbindungen durch Luftstromabsaugung in einem geschlossenen Kreislauf;
entweder
e) das Entfernen von löslichen organischen Verbindungen durch biologische Behandlung mittels Oxidation, bestimmt durch den Stoffwechsel aerober Bakterien in Suspension, d.h. mittels Aktivschlamm, oder
e)' das Entfernen von löslichen organischen Verbindungen durch Aktivkohle-Filtration;
f) Entsalzung, umfassend einen Filtrationsabschnitt, einen Ultrafiltrationsabschnitt und einen oder mehrere Umkehrosmoseabschnitte;
g) das Eindampfen und Konzentrieren der salzhaltigen Konzentrate aus der Umkehrosmose;
h) das Entfernen von Bor aus dem Permeat der Umkehrosmose in einem Abschnitt zur Entfernung von Bor durch Ionenaustauschharze.

2. Verfahren nach Anspruch 1, wobei die Stufe a) in Gegenwart eines oder mehrerer ÖI-Wasser-Abscheider, vorzugsweise API-Abscheider, durchgeführt wird.

3. Verfahren nach Anspruch 1 oder 2, wobei die Stufe b) durch H₂S Absaugung oder durch chemische Oxidation, vorzugsweise in einem geschlossenen Kreislauf mit Stickstoff bei saurem pH-Wert, durchgeführt wird.

4. Verfahren nach einem der Ansprüche 1 bis 3, wobei die Stufe c) durch ein Kalk-Natriumcarbonat-Verfahren unter Einfügung eines Sandfiltrationsabschnittes am Auslass durchgeführt wird.

5. Verfahren nach einem der Ansprüche 1 bis 4, wobei die Stufe e) durch eine biologische Behandlung auf der Basis von Aktivschlamm in Gegenwart einer geeigneten Kohlenstoff-, Phosphor- und Harnstoffquelle und eines nachgeschalteten Klärabschnittes zur Abtrennung des Aktivschlamms durchgeführt wird.

6. Verfahren nach einem der Ansprüche 1 bis 5, wobei die Stufe f) mit Hilfe von einem Sandfiltrationsabschnitt, einem Ultrafiltrationsabschnitt und einem oder mehreren Umkehrosmoseabschnitten durchgeführt wird.

7. Verfahren nach Anspruch 6, wobei die Stufe f) durch Vorsehen eines Enthärtungsabschnittes auf Harz-Basis, gefolgt von einem Entgasungsabschnitt zwischen dem Ultrafiltrations- und dem Umkehrosmoseabschnitt, durchgeführt wird.

8. Verfahren nach einem der Ansprüche 1 bis 7, wobei Stufe g) durch einen oder mehrere einstufige Systeme vom Typ Verdampfer/Konzentrator durchgeführt wird.

## Revendications

1. Procédé intégré pour le traitement d'eaux de production associées à l'extraction de pétrole brut comprenant les étapes suivantes dans l'ordre indiqué :
a) élimination des composés organiques dispersés dans un traitement à au moins deux étapes, dans lequel une première étape élimine la majeure partie de la teneur en composés organiques dans la dispersion et une deuxième étape suivante permet d'atteindre les limites de concentration desdits contaminants nécessaires pour les sections en aval ;
b) élimination de H₂S ;
c) adoucissement chimique/physique par un procédé à base de chaux-carbonate de soude ;
d) élimination des composés inorganiques gazeux dissous effectuée par entrainement de gaz avec un flux d'air dans un circuit fermé ;
soit e) élimination des composés organiques solubles par traitement biologique au moyen d'une oxydation déterminée par le métabolisme de bactéries aérobies en suspension, c'est-à-dire au moyen de boues activées, ou
e)' élimination de composés organiques solubles par filtration sur charbon actif ;
f) dessalement comprenant une section de filtration, une section d'ultrafiltration et une ou plusieurs sections d'osmose inverse ;
g) évaporation et concentration des concentrés salins par osmose inverse ;
h) élimination du bore à partir du perméat d'osmose inverse, dans une section pour éliminer le bore par l'intermédiaire de résines d'échange d'ions.

2. Procédé, selon la revendication 1, dans lequel l'étape a) est conduite en présence d'un ou plusieurs séparateurs huile-eau, de préférence des séparateurs API.

3. Procédé, selon la revendication 1 ou 2, dans lequel l'étape b) est effectuée par entrainement de gaz de H₂S ou par oxydation chimique, de préférence dans un circuit fermé avec de l'azote à pH acide.

4. Procédé, selon chacune des revendications 1 à 3, dans lequel l'étape c) est conduite par un procédé à base de chaux-carbonate de soude avec l'insertion d'une section de filtration sur sable à la sortie.

5. Procédé, selon chacune des revendications 1 à 4, dans lequel l'étape e) est effectuée par traitement biologique à base de boues activées, en présence d'une source de carbone adaptée, de phosphore et d'urée et en aval, une section de clarification pour la séparation des boues activées.

6. Procédé, selon chacune des revendications 1 à 5, dans lequel l'étape f) est effectuée au moyen d'une section de filtration sur sable, d'une section d'ultrafiltration et d'une ou plusieurs sections d'osmose inverse.

7. Procédé selon la revendication 6,
dans lequel l'étape f) est effectuée en fournissant une section d'adoucissement à base de résine suivie d'une section de dégazage entre les sections d'ultrafiltration et d'osmose inverse.

8. Procédé selon l'une quelconque des revendications 1 à 7,
dans lequel l'étape g) est effectuée par un ou plusieurs systèmes de type évaporateur/concentrateur à un étage.
